# EUROPÄISCHE PATENTSCHRIFT

(11) **EP 3 418 159 B1**
(45) Veröffentlichungstag und Bekanntmachung des Hinweises auf die Patenterteilung: **12.05.2021**
(21) Anmeldenummer: 18178163.4
(22) Anmeldetag: 18.06.2018
(51) Int. Cl.: B62D 13/06, B62D 15/02

(54) **VERFAHREN ZUM BETREIBEN EINER PARKASSISTENZVORRICHTUNG EINES KRAFTFAHRZEUGS MIT KOMBINIERTER ANSICHT AUS TRANSPARENTEM ANHÄNGER UND UMGEBUNG**
METHOD FOR OPERATING A PARK ASSISTING DEVICE OF A MOTOR VEHICLE WITH COMBINED VIEW OF TRANSPARENT TRAILER AND ENVIRONMENT
PROCÉDÉ DE FONCTIONNEMENT D'UN DISPOSITIF D'AIDE AU STATIONNEMENT D'UN VÉHICULE AUTOMOBILE À VUE COMBINÉE DE LA REMORQUE TRANSPARENTE ET DE L'ENVIRONNEMENT

(30) Priorität: 20.06.2017 DE 102017113469
(43) Veröffentlichungstag der Anmeldung: 26.12.2018
(73) Patentinhaber: Valeo Schalter und Sensoren GmbH, 74321 Bietigheim-Bissingen (DE)
(72) Erfinder: Heimberger, Markus, 74321 Bietigheim-Bissingen (DE); Beck, Manuel, 74321 Bietigheim-Bissingen (DE)
(74) Vertreter: Pothmann, Karsten

(56) Entgegenhaltungen:
- DE-A1-102015 214 611
- GB-A- 2 515 800
- GB-A- 2 529 408
- GB-A- 2 541 906
- JP-A- 2006 256 544

## Beschreibung

Die Erfindung betrifft ein Verfahren zum Betreiben einer Parkassistenzvorrichtung eines Kraftfahrzeugs mit einem angehängten Anhänger. Die Erfindung betrifft auch eine Parkassistenzvorrichtung für ein Kraftfahrzeugs mit einem angehängten Anhänger, mit einer an dem Kraftfahrzeug angeordneten ersten Kameraeinheit zum Erzeugen eines ersten Bildes einer Umgebung des Kraftfahrzeugs, auf welchem der Anhänger abgebildet ist, mit einer an dem Anhänger angeordneten zweiten Kameraeinheit zum Erzeugen eines zweiten Bildes einer Umgebung des Anhängers und mit einer Recheneinheit zum Erzeugen einer kombinierten Ansicht der Umgebung aus dem ersten und dem zweiten Bild, wobei ein von dem Anhänger eingenommener Bildbereich des ersten Bildes zumindest bereichsweise mit einer Bildinformation des zweiten Bilds überlagert ist, sodass der Anhänger in der kombinierten Ansicht transparent vor der im zweiten Bild abgebildeten Umgebung dargestellt ist.

Im Bereich der Park- oder Rangierassistenzvorrichtungen für Kraftfahrzeuge mit einem Anhänger gibt es eine Vielzahl von unterschiedlichen Unterstützungsstrategien für einen Fahrer. Die bestehenden Lösungen fokussieren sich dabei auf die Kontrolle und Anzeige einer beabsichtigten Bewegung des Gespanns, also des Kraftfahrzeugs mit dem angehängten Anhänger, und basieren auf dem Einstellen eines Knickwinkels zwischen dem Anhänger und dem Zugfahrzeug. Ein Beispiel hierfür findet sich in Form des sogenannten Trainer Assist in der EP 2 879 938 B1.

Des Weiteren wird beispielsweise in der DE 10 2007 011 180 A1 eine Rangierhilfe für Fahrer von Fahrzeugen, welche aus gegeneinander knickbaren Fahrzeugelementen bestehen, vorgeschlagen. Dabei wird ein künftiger Fahrverlauf des Gefährts prognostiziert und mit durch eine Kamera aufgenommenen Bilddaten überlagert.

In der DE 10 2005 045 196 A1 wird eine Rangierhilfe für ein Zugfahrzeug mit einem Anhänger vorgeschlagen, bei welcher mittels einer Anzeigeeinrichtung ein Kamerabild eines in rückwärtiger Fahrtrichtung liegenden Umfeldbereiches des Anhängers darstellbar ist, wobei eine mittels eines Simulationsrechners berechnete Trajektorie des Aufpunktes des Anhängers in das Kamerabild einblendbar ist. Auch aus der DE 10 2013 100 040 A1 ist ein Führungsverfahren einer Rückwärtsparkhilfe bekannt.

Die GB 2541906 A zeigt eine Parkassistenzvorrichtung gemäß Oberbegriff des Anspruchs 1. Die GB 2 515 800 A zeigt eine weitere Parkassistenzvorrichtung.

Es stellt sich die Aufgabe, die Bedienung einer Parkassistenzvorrichtung eines Kraftfahrzeugs und damit ein durch eine Parkassistenzvorrichtung unterstütztes Einparken zu vereinfachen.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Verfahren zum Betreiben einer Parkassistenzvorrichtung eines Kraftfahrzeugs mit einem angehängten Anhänger, mit einer Reihe von Verfahrensschritten. Die Parkassistenzvorrichtung kann hier auch als eine Rangierassistenzvorrichtung verstanden werden. Ein erster Verfahrensschritt ist hier ein Erzeugen eines ersten Bildes einer (bevorzugt heckseitigen) Umgebung des Kraftfahrzeugs, auf welchem der Anhänger abgebildet ist, durch eine (insbesondere heckseitig) an dem Kraftfahrzeug angeordnete erste Kameraeinheit der Parkassistenzvorrichtung. Ein weiterer Verfahrensschritt ist ein Erzeugen eines zweiten Bildes einer (bevorzugt heckseitigen) Umgebung des Anhängers durch eine (insbesondere heckseitig) an dem Anhänger angeordnete zweite Kameraeinheit der Parkassistenzvorrichtung. Die Kameraeinheit an dem Anhänger kann dabei beispielsweise über eine drahtlose Verbindung mit einer Recheneinheit der Parkassistenzvorrichtung gekoppelt sein. Die drahtlose Verbindung kann beispielsweise eine drahtlose Netzwerkverbindung (Wireless-Local-Area-Network-Verbindung, WLAN-Verbindung) und/oder eine Nahfunkverbindung wie zum Beispiel eine Bluetooth-Verbindung umfassen. Die Kameraeinheit kann auch eine nachträglich an dem Anhänger angebrachte Kameraeinheit sein, insbesondere eine zerstörungs- und/oder werkzeugfrei von dem Anhänger lösbare Kameraeinheit. Ein weiterer Verfahrensschritt ist ein Erzeugen einer kombinierten Ansicht der Umgebung aus dem ersten und dem zweiten Bild, wobei ein von dem Anhänger eingenommener Bildbereich des ersten Bildes zumindest bereichsweise, also bereichsweise oder ganz, mit einer Bildinformation des zweiten Bildes überlagert wird, sodass der Anhänger in der kombinierten Ansicht zumindest bereichsweise transparent vor der im zweiten Bild abgebildeten Umgebung dargestellt wird, durch die Recheneinheit der Parkassistenzvorrichtung.

Ein darauffolgender Verfahrensschritt ist ein Anzeigen der kombinierten Ansicht mit einer der kombinierten Ansicht überlagerten (insbesondere bogenförmigen) Soll-Fahrtrajektorie für den Anhänger bei einer Rückwärtsfahrt des Kraftfahrzeugs mit dem Anhänger durch eine Anzeigeeinheit der Parkassistenzvorrichtung. Dabei ist die Soll-Fahrtrajektorie unabhängig von der Ist-Fahrtrajektorie, welche durch einen Ist-Knickwinkel zwischen Kraftfahrzeug und Anhänger sowie einen Ist-Lenkwinkel des Kraftfahrzeugs vorgegeben ist. Die Soll-Fahrtrajektorie ist vielmehr eine gewünschte und durch einen noch zu bestimmenden oder zu ermittelnden Knickwinkel und Lenkwinkel zu erreichende Soll-Fahrtrajektorie für das Gespann, also für das Kraftfahrzeug mit dem angehängten Anhänger. Die kombinierte Ansicht kann insbesondere fortlaufend aktualisiert werden, das heißt die beiden Bilder und die kombinierte Ansicht fortlaufend erzeugt und angezeigt werden, und auch die Soll-Fahrtrajektorie fortlaufend berechnet und mit der kombinierten Ansicht überlagert werden.

Ein weiterer Verfahrensschritt ist ein Auswählen eines Verlaufs für die (oder eines Verlaufs der) Soll-Fahrtrajektorie mittels eines Betätigen einer Bedieneinrichtung des Kraftfahrzeugs durch eine Bedienperson. Insbesondere kann die Soll-Fahrtrajektorie durch die Bedienperson mittels eines Rotierens eines Lenkrades des Kraftfahrzeugs ausgewählt werden. Mit dem Verlauf kann insbesondere eine Krümmung in Kombination mit einem jeweiligen Zielort wie allgemein von Rückfahrkameras bekannt ausgewählt werden. Dabei bleibt bevorzugt ein bei dem Rotieren des Lenkrads eingeschlagener Lenkwinkel des Kraftfahrzeugs für den Verlauf der Soll-Fahrtrajektorie unberücksichtigt. Das Anzeigen der kombinierten Ansicht und das Auswählen des Verlaufs kann hier insbesondere wiederholt durchgeführt werden, sodass stets die Soll-Fahrtrajektorie mit dem ausgewählten Verlauf angezeigt oder dargestellt wird, und somit die Bedienperson die Soll-Fahrtrajektorie an einen zu erreichenden Zielort, beispielsweise an einen zu erreichenden Parkplatz, anpassen kann.

Die Soll-Fahrtrajektorie wird somit bei dem Auswählen mittels des Lenkrads nicht als die Trajektorie angezeigt, welche dem bei dem Rotieren des Lenkrads eingeschlagenen Lenkwinkel entspricht, sondern vielmehr entkoppelt von der im allgemeinen Fahrbetrieb des Kraftfahrzeugs dem Lenkrad zugeordneten Steuerfunktion. Des Weiteren erfolgt ein Starten eines zumindest teilautomatisierten, das heißt teilautomatisierten oder vollautomatisierten, Parkvorgangs durch die Bedienperson, bei welchem der Anhänger automatisch durch ein jeweils entsprechend der Soll-Fahrtrajektorie mit dem ausgewählten Verlauf und entsprechend einem Ist-Knickwinkel zwischen dem Anhänger und dem Kraftfahrzeug durch die Parkassistenzvorrichtung berechneten (und damit vorgegebenen) Lenkwinkel auf der Soll-Fahrtrajektorie mit dem ausgewählten Verlauf gehalten wird. Über den teilautomatisierten Parkvorgang wird also zumindest eine automatische Quersteuerung des Gespanns erreicht.

Anstelle einer Anzeige eines Knickwinkels wie in bekannten Verfahren wird somit direkt der Bewegungspfad des Anhängers und damit des Gespanns angezeigt. Der Fahrer kann dabei die Bedieneinrichtung, insbesondere das Lenkrad, benutzen, um den Bewegungspfad entsprechend der Soll-Fahrtrajektorie vor Beginn der Bewegung direkt einzustellen und somit indirekt auch den korrekten Knickwinkel, welcher für die gewünschte Bewegung erforderlich ist, einzustellen. Unter einem direkten Einstellen kann hier ein proportionales Einstellen verstanden werden, bei welchem ein Betätigen der Bedieneinrichtung, insbesondere Drehen des Lenkrades, in die eine Richtung ein Krümmen des Verlaufs beziehungsweise ein Auswählen eines Verlaufs mit einer größeren Biegung in die eine Richtung bewirkt und ein Betätigen der Bedieneinrichtung, insbesondere Drehen des Lenkrades, in die andere Richtung ein Krümmen des Verlaufs beziehungsweise ein Auswählen eines Verlaufs mit einer größeren Biegung in die andere Richtung bewirkt. Ein längeres Betätigen der Bedieneinrichtung, insbesondere Drehen des Lenkrads, in ein der Richtungen bewirkt bei dem proportionalen Einstellen ein stärkeres Biegen des Verlaufs beziehungsweise ein Auswählen eines Verlaufs mit einer stärkeren Biegung in die jeweilige Richtung.

Um den bestmöglichen Bewegungspfad auswählen zu können, ist dabei der Blick auf die Umgebung hinter dem Anhänger erforderlich, was durch die kombinierte Ansicht mit dem transparenten oder "unsichtbaren" Anhänger erreicht wird. Insbesondere kann hier auch vorgesehen sein, dass die Soll-Fahrtrajektorie während des Parkvorgangs mit einer weiteren Bedieneinheit, welche das Lenkrad oder aber auch die Bedieneinrichtung sein kann, nachjustiert wird. Dies kann insbesondere bei sich bewegendem Gespann erfolgen.

Das hat den Vorteil, dass die von gewöhnlichen Rangierhilfen für einzelne Kraftfahrzeuge bekannte Bedienweise nunmehr auch auf das Rangieren oder Parken mit einem Anhänger übertragen wird. So kann der Fahrer, wie von den Einparkhilfen für Kraftfahrzeuge ohne Anhänger mit einer Hecksichtkamera bekannt, durch das Betätigen der Bedieneinrichtung, insbesondere ein Einschlagen des Lenkrads, direkt einen Verlauf für eine Soll-Fahrtrajektorie, das heißt eine Soll-Fahrtrajektorie, auswählen. Da er in der kombinierten Ansicht quasi durch den Hänger hindurch die rückwärtige Umgebung betrachten kann, kann er so den gewünschten Zielort auf intuitive Weise erreichen. Da die konkrete Einstellung des entsprechenden erforderlichen Lenkwinkels jedoch von der Parkassistenzvorrichtung übernommen wird, wird ihm die mühsame, von Lenk- und Knickwinkel abhängige Umsetzung der Soll-Fahrtrajektorie für das Gespann jedoch erspart. Dabei kann der Fahrer bevorzugt entweder während eines während einer Bewegung des Gespanns, also während des teilautomatisierten Parkvorgangs, die Soll-Fahrtrajektorie mit einem von der Bedieneinrichtung, insbesondere dem Lenkrad, verschiedenen Bedienelement nachjustieren, oder aber nach einem entsprechenden Anhalten mit der Bedieneinrichtung direkt den ausgewählten Verlauf für die Soll-Fahrtrajektorie anpassen oder verändern.

In einer besonders vorteilhaften Ausführungsform ist entsprechend vorgesehen, dass das Auswählen des Verlaufs und insbesondere auch das Anzeigen der kombinierten Ansicht mit der überlagerten Soll-Fahrtrajektorie sowie das Erzeugen der beiden Bilder und der kombinierten Ansicht nur durchgeführt werden kann, wenn das Kraftfahrzeug steht oder sich mit weniger als einer vorgegebenen Höchstgeschwindigkeit von beispielsweise 3 km/h bewegt. Das Kraftfahrzeug kann also bei dem Auswählen des Verlaufs und/oder dem Anzeigen der kombinierten Ansicht und insbesondere auch bei dem Erzeugen der beiden Bilder und der kombinierten Ansicht stehen oder sich mit weniger als der Höchstgeschwindigkeit bewegen.

Das hat den Vorteil, dass die Sicherheit und Intuitivität der Bedienung erhöht wird, insbesondere da das Lenkrad so deutlich von der gewöhnlichen Funktion entkoppelt wird, nämlich der Funktion des Einstellens eines Lenkwinkels für das Kraftfahrzeug. Somit wird ein ansonsten möglicherweise vorhandener Steuerreflex des Fahrers, welcher bei dem rückwärtigen Fahren jedoch kontraproduktiv wäre, vermieden. Vielmehr kann der Fahrer sich einen Überblick über die Umgebung verschaffen und den Verlauf der Soll-Fahrtrajektorie entsprechend auswählen.

In einer weiteren vorteilhaften Ausführungsform ist vorgesehen, dass in Abhängigkeit des ausgewählten Verlaufs für die Soll-Fahrtrajektorie basierend auf einem erfassten Knickwinkel zwischen einer Fahrzeuglängsachse des Kraftfahrzeugs und einer Fahrzeuglängsachse des Anhängers sowie insbesondere auf einer Position des Kraftfahrzeugs der bei Folgen der Soll-Fahrtrajektorie des Anhängers durch das Kraftfahrzeug und insbesondere auch den Anhänger überfahrene Untergrund in der Umgebung des Gespanns in der kombinierten Ansicht markiert oder angezeigt wird. Das hat den Vorteil, dass der Fahrer einen Raumbedarf für die Soll-Fahrtrajektorie besser einschätzen kann und damit beispielsweise auch eine Kollision mit Hindernissen vermeiden kann beziehungsweise beurteilen kann, ob eine gewünschte Soll-Fahrtrajektorie mit einem gewünschten Verlauf in der entsprechenden Umgebung sinnvoll und/oder sicher ist.

In einer weiteren vorteilhaften Ausführungsform ist vorgesehen, dass durch die Parkassistenzvorrichtung, das heißt insbesondere eine Recheneinheit der Parkassistenzvorrichtung, für die Umgebung des Kraftfahrzeugs und des Anhängers eine Hinderniserkennung, das heißt eine automatische Erkennung von nicht überfahrbaren Objekten wie beispielsweise Pfählen oder Bäumen, durchgeführt wird. Falls für einen bestimmten Verlauf der Soll-Fahrtrajektorie im Bereich des bei Folgen dieser Soll-Fahrtrajektorie mit dem bestimmten Verlauf durch das Kraftfahrzeug und/oder den Anhänger überfahrenen Untergrunds ein Hindernis erkannt wird, so kann dieser bestimmte Verlauf nicht für den zumindest teilautomatisierten Parkvorgang ausgewählt werden, das heißt in diesem Fall ist der bestimmte Verlauf nicht für den zumindest teilautomatisierten Parkvorgang auswählbar.

Das hat den Vorteil, dass die Sicherheit und Einfachheit für den Parkvorgang erhöht ist, da eine Kollision mit einem Hindernis automatisch unterbunden wird. Besonders vorteilhafterweise wird der überfahrene Untergrund dabei (bevorzugt mit einer Markierung des erkannten Hindernisses) auch angezeigt, sodass der Fahrer des Kraftfahrzeugs eine Rückmeldung darüber erhält, weshalb der entsprechende Verlauf beziehungsweise die entsprechende Soll-Fahrtrajektorie nicht auswählbar ist.

In einer besonders vorteilhaften weiteren Ausführungsform ist vorgesehen, dass der (zumindest teilautomatisierte) Parkvorgang unterbrochen wird, falls die Bedieneinrichtung, insbesondere das Lenkrad, während des Parkvorgangs von einer Bedienperson angefasst oder berührt und/oder bewegt wird und/oder falls die Bedienperson ein Bremspedal betätigt. Das Bewegen kann hier im Sinne eines Übertragens eines Drehmoments verstanden werden, insbesondere kann auch ein Bremsen einer Rotation des Lenkrads also als Bewegen verstanden werden.

Das hat den Vorteil, dass die Soll-Fahrtrajektorie mit dem ausgewählten Verlauf nicht durch einen Eingriff einer Bedienperson verfälscht wird. Überdies wird auch die Sicherheit erhöht, insbesondere da die Verletzungsgefahr der Bedienperson durch das Lenkrad reduziert wird, und auch da der Parkvorgang jederzeit unterbrochen werden kann.

In einer weiteren vorteilhaften Ausführungsform ist vorgesehen, dass bei dem zumindest teilautomatisierten Parkvorgang auch eine automatische Längssteuerung, ein Vorgeben einer Fahrgeschwindigkeit, des Kraftfahrzeugs und damit des Gespanns erfolgt. Das hat den Vorteil, dass der Parkvorgang besonders einfach für den Fahrer durchgeführt wird.

In einer weiteren vorteilhaften Ausführungsform ist vorgesehen, dass bei einem Unterbrechen des zumindest teilautomatisierten Parkvorgangs durch eine Bedienperson mit einem darauffolgenden Ändern des ausgewählten Verlaufs der Soll-Fahrtrajektorie der geänderte Verlauf der Soll-Fahrtrajektorie und mit diesem auch der zuvor ausgewählte Verlauf der Soll-Fahrtrajektorie in der dann aktualisierten kombinierten Ansicht angezeigt wird.

Das hat den Vorteil, dass der Fahrer einen besonders guten Überblick über das Verhalten des Gespanns und seine zuvor erfolgte Einschätzung, basierend auf welcher der Verlauf zunächst ausgewählt wurde, erhält.

Erfindungsgemäß ist vorgesehen, dass für den geänderten Verlauf der Soll-Fahrtrajektorie und für den zuvor ausgewählten Verlauf der Soll-Fahrtrajektorie der beim Folgen der Soll-Fahrtrajektorie des Anhängers durch das Kraftfahrzeug überfahrene Untergrund in der kombinierten Ansicht markiert wird. Die Bedienperson erhält somit einen Überblick über den in den unterschiedlichen Soll-Fahrtrajektorien überfahrenen Untergrund.

Das hat den Vorteil, dass unterschiedliche Verläufe für die Soll-Fahrtrajektorie direkt und intuitiver, das heißt einfacher, miteinander verglichen werden können.

Die Erfindung betrifft auch eine Parkassistenzvorrichtung für ein Kraftfahrzeug mit einem angehängten Anhänger, mit einer an dem Kraftfahrzeug angeordneten ersten Kameraeinheit zum Erzeugen eines ersten Bildes einer Umgebung des Kraftfahrzeugs, auf welchem der Anhänger abgebildet ist, mit einer an dem Anhänger angeordneten zweiten Kameraeinheit zum Erzeugen eines zweiten Bildes einer Umgebung des Anhängers und einer Recheneinheit zum Erzeugen einer kombinierten Ansicht der Umgebung aus dem ersten und dem zweiten Bild, wobei ein von dem Anhänger eingenommener Bildbereich des ersten Bildes zumindest bereichsweise mit einer Bildinformation des zweiten Bilds überlagert ist, sodass der Anhänger in der kombinierten Ansicht zumindest bereichsweise transparent vor der im zweiten Bild abgebildeten Umgebung dargestellt ist. Wichtig ist dabei, dass die Parkassistenzvorrichtung auch eine Anzeigeeinheit zum Anzeigen der kombinierten Ansicht mit einer von der Ansicht überlagerten Soll-Fahrtrajektorie für den Anhänger aufweist sowie eine Bedieneinrichtung, insbesondere ein Lenkrad, zum Auswählen eines Verlaufs für die Soll-Fahrtrajektorie mittels eines Betätigen der Bedieneinrichtung, insbesondere mittels eines Rotierens des Lenkrades. Dabei ist die Parkassistenzvorrichtung ausgebildet, einen zumindest teilautomatisierten Parkvorgang durchzuführen, bei welchem der Anhänger automatisch auf der Soll-Fahrtrajektorie mit dem ausgewählten Verlauf gehalten wird.

Vorteile und vorteilhafte Ausführungsformen der Parkassistenzvorrichtung entsprechen hier Vorteilen und vorteilhaften Ausführungsformen des beschriebenen Verfahrens.

Die Erfindung betrifft auch ein Kraftfahrzeug mit einer solchen Parkassistenzvorrichtung.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert. Dabei zeigen:
- Fig. 1: ein Kraftfahrzeug mit einer beispielhaften Ausführungsform einer Parkassistenzvorrichtung in einem Beispielsszenario; und
- Fig. 2: eine beispielhafte kombinierte Ansicht einer Umgebung, wie sie durch eine Anzeigeeinheit angezeigt werden kann.

In den Figuren werden gleiche oder funktionsgleiche Elemente mit den gleichen Bezugszeichen versehen.

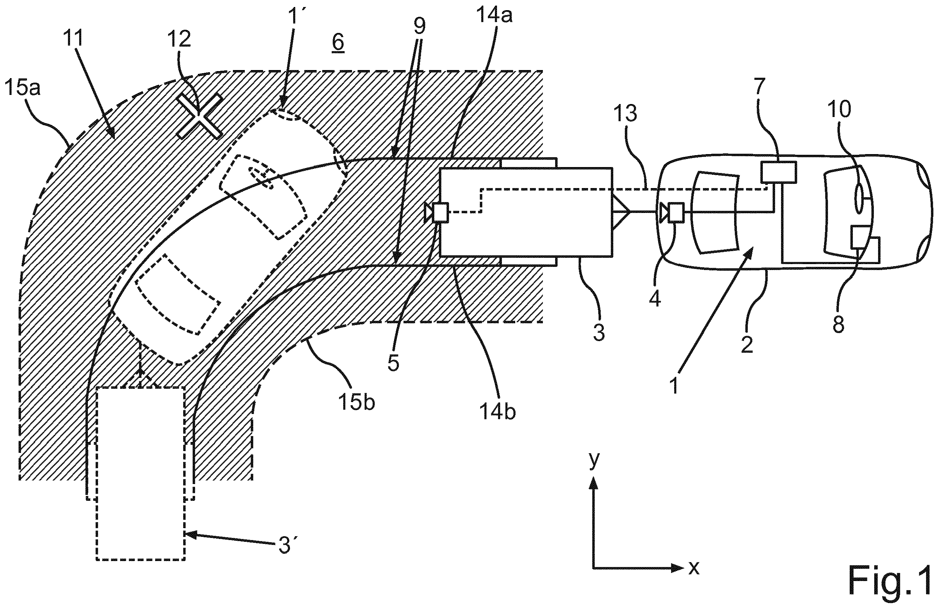

In Fig. 1 ist eine beispielhafte Ausführungsform einer Parkassistenzvorrichtung 1 in einem Kraftfahrzeug 2 mit einem angehängten Anhänger 3 dargestellt. Die Parkassistenzvorrichtung 1 umfasst dabei eine an dem Kraftfahrzeug 2 angeordnete erste Kameraeinheit 4 sowie eine an dem Anhänger 3 angeordnete zweite Kameraeinheit 5. Die erste Kameraeinheit 4 ist dabei zum Erzeugen eines ersten Bildes einer Umgebung

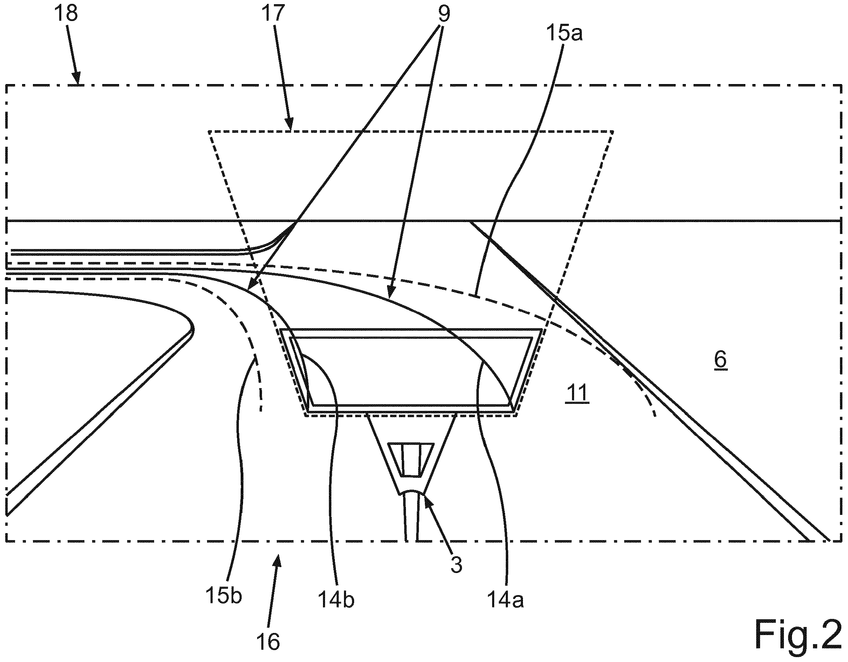

6 des Kraftfahrzeugs 2 ausgebildet, auf welchem der Anhänger 3 abgebildet ist. Die zweite Kameraeinheit 5 ist zum Erzeugen eines zweiten Bildes der Umgebung 6 des Anhängers 3, die auch eine Umgebung des Kraftfahrzeugs 2 ist, ausgebildet. Die Parkassistenzvorrichtung 1 weist auch eine Rechenvorrichtung 7 auf, welche mit den beiden Kameraeinheiten 4, 5 gekoppelt ist und welche ausgebildet ist, eine kombinierte Ansicht 16 (Fig. 2) der Umgebung 6 aus dem ersten und dem zweiten Bild zu erzeugen. In der kombinierten Ansicht wird dabei ein von dem Anhänger 3 eingenommener Bildbereich 17 (Fig.2) des ersten Bildes zumindest bereichsweise mit einer Bildinformation des zweiten Bildes überlagert, sodass der Anhänger 3 in der kombinierten Ansicht zumindest bereichsweise transparent vor der im zweiten Bild abgebildeten Umgebung 6 dargestellt ist. Der Anhänger 3 kann somit in der kombinierten Ansicht unsichtbar oder durchsichtig gemacht beziehungsweise dargestellt werden. Die zweite Kamera 5 und die Recheneinheit 7 sind dabei vorliegend durch eine Drahtlosverbindung 13, beispielsweise eine kabellose Netzwerkverbindung (WLAN-Verbindung) und/oder eine Bluetooth-Verbindung miteinander gekoppelt.

Die Parkassistenzvorrichtung 1 weist auch eine Anzeigeeinheit 8 zum Anzeigen der kombinierten Ansicht mit einer der Ansicht überlagerten Soll-Fahrtrajektorie 9 für den Anhänger 3 auf, sowie ein Lenkrad 10 zum Auswählen eines Verlaufs für die Soll-Fahrtrajektorie 9 mittels eines Rotierens des Lenkrades 10. Dabei ist die Parkassistenzvorrichtung 1 ausgebildet, einen zumindest teilautomatisierten Parkvorgang durchzuführen, bei welchem der Anhänger 3 bei einer Rückwärtsfahrt des Gespanns mit Kraftfahrzeug 2 und Anhänger 3 automatisch auf der Soll-Fahrtrajektorie 9 mit dem ausgewählten Verlauf gehalten wird.

Vorliegend ist auch ein bei einem Folgen der Soll-Fahrtrajektorie 9 durch den Anhänger 3 von dem Kraftfahrzeug 2 überfahrener Untergrund 11 hervorgehoben. Dies ist vorteilhaft, um etwaige Kollisionen vorherzusehen beziehungsweise zu vermeiden. Zur besseren Illustration sind vorliegend das Kraftfahrzeug 2 sowie der Anhänger 3 gestrichelt in einer künftigen Position eingezeichnet, welche der Anhänger 3 und das Kraftfahrzeug 2 bei dem Folgen der Trajektorie 9 bei einer Rückwärtsfahrt einnehmen wird. Dabei befindet sich im gezeigten Beispiel ein Hindernis 12 in dem überfahrenen Bereich 11. Dieses würde somit zu einer Kollision mit dem Kraftfahrzeug 2 führen, wenn der Anhänger 3 in der Rückwärtsfahrt der Trajektorie 9 mit dem ausgewählten Verlauf folgt.

Im vorliegenden Beispiel ist entsprechend die Parkassistenzvorrichtung 1 beziehungsweise die Recheneinheit 7 auch ausgebildet, für die Umgebung 6 eine

Hinderniserkennung durchzuführen und, falls für einen bestimmten Verlauf der Soll-Fahrtrajektorie 9, wie beispielsweise der gezeigte Verlauf, im Bereich des bei Folgen dieser Soll-Fahrtrajektorie durch das Kraftfahrzeug 2 überfahrenen Untergrunds 11, wie vorliegend, ein Hindernis 12 erkannt wird, dieser bestimmte Verlauf und damit die vorliegend dargestellte Soll-Fahrtrajektorie 9 nicht für den teilautomatisierten Parkvorgang ausgewählt werden kann. Im gezeigten Beispiel würde der Fahrer des Kraftfahrzeugs 2 somit eine Fehlermeldung erzeugen beziehungsweise die Auswahl des vorliegend dargestellten Verlaufs der Soll-Fahrtrajektorie 9 durch den Fahrer über ein Rotieren des Lenkrads 10 wird durch die Parkassistenzvorrichtung 1 nicht zulassen.

Im Einsatz mit einem mit einer zweiten Kameraeinheit 5 als Rückfahrkamera ausgestatteten Anhänger 3 kann ein beispielhafter Ablauf zum Betreiben der Parkassistenzvorrichtung 1 somit wie folgt aussehen. Zunächst kann ein Fahrer des Kraftfahrzeugs 2 die Parkassistenzvorrichtung 1 aktivieren. Nach einem Erzeugen des ersten und des zweiten Bildes durch die beiden Kameraeinheiten 4, 5 wird durch die Recheneinheit 7 die kombinierte Ansicht der Umgebung 6, eine "unsichtbare-Anhänger-Ansicht", generiert. Diese wird über die Anzeigeeinheit 8 dem Fahrer angezeigt, welcher über das Rotieren des Lenkrads 10 direkt mit einem proportionalen Einstellen einen Verlauf der Soll-Fahrtrajektorie 9 in der kombinierten Ansicht auswählt, welche entsprechend der Eingabe des Fahrers aktualisiert wird. Dabei kann ein erstes Paar an Linien 14a, 14b den Bewegungspfad und damit die Trajektorie 9 des Anhängers darstellen und ein zweites Linienpaar 15a, 15b den überfahrenen Bereich anzeigen, welcher von dem Kraftfahrzeug 2 benötigt wird, um den Anhänger 3 die Trajektorie 9 entlangzuschieben.

Ist der Fahrer mit dem gewählten Verlauf der Soll-Fahrtrajektorie 9 zufrieden, so startet er einen zumindest teilautomatisierten Parkvorgang und entfernt seine Hände von dem Lenkrad 10 und beispielsweise der Bremse.

Je nach System kann nun entweder in dem Parkvorgang nur eine Quersteuerung automatisiert werden, der Fahrer also Gas und Bremse betätigen, um die Längssteuerung zu übernehmen und die Fahrgeschwindigkeit entlang der Soll-Fahrtrajektorie 9 mit dem gewählten Verlauf zu bestimmen, oder aber alternativ das System die Längssteuerung übernehmen. Bei Erreichen einer Zielposition durch den Anhänger 3 kann der Fahrer den Parkvorgang stoppen, beispielsweise in dem er ein Bremspedal bedient und/oder das Lenkrad anfasst und auf dieses ein Drehmoment ausübt.

Der Fahrer kann beispielsweise den Bewegungspfad des Anhängers 3, das heißt die Soll-Fahrtrajektorie 9 ändern oder anpassen, indem er bei Stillstand des Kraftfahrzeugs 2 nochmals das Lenkrad rotiert, um den Verlauf der Soll-Fahrtrajektorie 9 anzupassen. Dies ist praktisch, da oftmals bei Abfahren der Trajektorie 9 im Nachhinein aufgrund der größeren Nähe zu einem Objekt in der Umgebung 6 der Verlauf der gewünschten Soll-Fahrtrajektorie 9 besser eingestellt werden kann. Alternativ oder ergänzend kann der Fahrer den Verlauf der Soll-Fahrtrajektorie 9 auch über eine weitere Bedieneinheit einstellen. Dies kann sowohl bei stehendem Kraftfahrzeug 2 als auch bei einem sich langsam mit einer eine vorgegebene Grenzgeschwindigkeit nicht übertreffenden Geschwindigkeit bewegenden Kraftfahrzeug 2 erfolgen. Hierbei kann die Soll-Fahrtrajektorie 9 mit dem ursprünglich ausgewählten Verlauf angezeigt werden sowie insbesondere mit dieser die Soll-Fahrtrajektorie 9 mit einem angepassten oder abgeänderten Verlauf, und auch der jeweils entsprechend überfahrene Untergrund 11.

In Fig. 2 ist eine beispielhafte kombinierte Ansicht, wie sie beispielsweise in dem in Fig. 1 dargestellten Szenario von der Anzeigeeinheit dargestellt werden kann, gezeigt. In der kombinierten Ansicht 16 wird dabei ein von dem Anhänger 3 eingenommener Bildbereich 17 des ersten Bildes bereichsweise mit einer Bildinformation des zweiten Bildes überlagert. So kann durch den Anhänger 3 gewissermaßen hindurchgesehen werden und ein Betrachter der Anzeigeeinheit 8 auch die Umgebung 6 hinter dem Anhänger unmittelbar beobachten. Für die kombinierte Ansicht 16 kann hier ein entsprechender Perspektiv- beziehungsweise Verzerrungsausgleich in dem zweiten Bild vorgesehen werden, sodass die Bildinformation in dem Bildbereich 17 ohne Brüche oder Sprünge möglichst stetig in den restlichen Bildbereich 18 übergeht, welcher dem ersten Bild entspricht. Vorliegend ist so die Soll-Fahrtrajektorie 9 auf einem Boden der Umgebung 6 mit den Linien 14a, 14b dargestellt, sowie der von dem Kraftfahrzeug 2 überfahrene Bereich 11, der durch die Linien 15a, 15b begrenzt wird.

Steht nun das Kraftfahrzeug 2 still und der Fahrer dreht das Lenkrad 10 (Fig. 1), so verändert sich der Verlauf der bevorzugt stets am Anhänger 3 beginnenden Soll-Fahrtrajektorie 9, sodass beispielsweise der Fahrer anstatt des vorliegend dargestellten rückwärtigen Abbiegens in eine Seitenstraße nun doch durch ein Umschwenken der Fahrtrajektorie 9 auf die Straße einen entsprechenden alternativen Bewegungspfad für Kraftfahrzeug 2 und Anhänger 3 wählen kann, beispielsweise für ein gerades Zurückstoßen und das vorwärtsfahrendes Einbiegen in die Seitenstraße.

## Patentansprüche

1. Verfahren zum Betreiben einer Parkassistenzvorrichtung (1) eines Kraftfahrzeugs (2) mit einem angehängten Anhänger (3), mit den Verfahrensschritten:
a) Erzeugen eines ersten Bildes einer Umgebung (6) des Kraftfahrzeugs (2), auf welchem der Anhänger (3) abgebildet ist, durch eine an dem Kraftfahrzeug (2) angeordnete erste Kameraeinheit (4) der Parkassistenzvorrichtung (1);
b) Erzeugen eines zweiten Bildes einer Umgebung (6) des Anhängers (3) durch eine an dem Anhänger (3) angeordnete zweite Kameraeinheit (5) der Parkassistenzvorrichtung (1);
c) Erzeugen einer kombinierten Ansicht (16) der Umgebung (6) aus dem ersten und dem zweiten Bild, wobei ein von dem Anhänger (3) eingenommener Bildbereich (17) des ersten Bildes zumindest bereichsweise mit einer Bildinformation des zweiten Bildes überlagert wird, sodass der Anhänger (3) in der kombinierten Ansicht (16) zumindest bereichsweise transparent vor der im zweiten Bild abgebildeten Umgebung (6) dargestellt wird, durch eine Recheneinheit (7) der Parkassistenzvorrichtung (1);
d) Anzeigen der kombinierten Ansicht (16) mit einer der Ansicht (16) überlagerten Soll-Fahrtrajektorie (9) für den Anhänger (3) durch eine Anzeigeeinheit (8) der Parkassistenzvorrichtung (1); **gekennzeichnet durch**,
e) Auswählen eines Verlaufs für die Soll-Fahrtrajektorie (9) mittels eines Betätigens einer Bedieneinrichtung des Kraftfahrzeugs (2); und
f) Starten eines zumindest teilautomatisierten Parkvorgangs, bei welchem der Anhänger (3) automatisch auf der Soll-Fahrtrajektorie (9) mit dem ausgewählten Verlauf gehalten wird, wobei in Abhängigkeit des ausgewählten Verlaufs für die Soll-Fahrtrajektorie (9) der bei Folgen der Soll-Fahrtrajektorie (9) des Anhängers (3) durch das Kraftfahrzeug (2) überfahrene Untergrund (11) in der kombinierten Ansicht (16) markiert wird.

2. Verfahren nach Anspruch 1,
**dadurch gekennzeichnet, dass**
das Auswählen gemäß Verfahrensschritt e), insbesondere auch das Anzeigen gemäß Verfahrensschritt d) und/oder das Erzeugen gemäß den Verfahrensschritten a), b) und c), nur durchgeführt werden kann, wenn das Kraftfahrzeug (2) steht.

3. Verfahren nach einem der vorhergehenden Ansprüche,
**dadurch gekennzeichnet, dass**
durch die Parkassistenzvorrichtung (1) für die Umgebung (6) des Kraftfahrzeugs (2) eine Hinderniserkennung durchgeführt wird und, falls für einen bestimmten Verlauf der Soll-Fahrtrajektorie (9) im Bereich des bei Folgen dieser Soll-Fahrtrajektorie (9) durch das Kraftfahrzeug (2) überfahrenen Untergrunds (11) ein Hindernis (12) erkannt wird, dieser bestimmte Verlauf nicht für den zumindest teilautomatisierten Parkvorgang ausgewählt werden kann.

4. Verfahren nach einem der vorhergehenden Ansprüche,
**dadurch gekennzeichnet, dass**
der zumindest teilautomatisierte Parkvorgang unterbrochen wird, falls die Bedieneinrichtung (10) während des Parkvorgangs von einer Bedienperson angefasst und/oder bewegt wird.

5. Verfahren nach einem der vorhergehenden Ansprüche,
**dadurch gekennzeichnet, dass**
bei dem zumindest teilautomatisierten Parkvorgang eine automatische Längssteuerung des Kraftfahrzeugs (2) erfolgt.

6. Verfahren nach einem der vorhergehenden Ansprüche,
**dadurch gekennzeichnet, dass**
bei einem Unterbrechen des zumindest teilautomatisierten Parkvorgangs durch eine Bedienperson mit einem darauf folgenden Ändern des ausgewählten Verlaufs der Soll-Fahrtrajektorie (9) der geänderte Verlauf der Soll-Fahrtrajektorie (9) und der zuvor ausgewählte Verlauf der Soll-Fahrtrajektorie (9) in der kombinierten Ansicht (16) angezeigt wird.

7. Verfahren nach Anspruch 6,
**dadurch gekennzeichnet, dass**
für den geänderten Verlauf der Soll-Fahrtrajektorie (9) und für den zuvor ausgewählten Verlauf der Soll-Fahrtrajektorie (9) der bei Folgen der Soll-Fahrtrajektorie (9) des Anhängers (3) durch das Kraftfahrzeug (2) überfahrene Untergrund (11) in der kombinierten Ansicht (16) markiert wird.

8. Verfahren nach einem der vorhergehenden Ansprüche,
**dadurch gekennzeichnet, dass**
das Auswählen mittels eines Rotierens eines Lenkrads (10) als Betätigen der Bedieneinrichtung erfolgt.

9. Parkassistenzvorrichtung (1) für ein Kraftfahrzeug (2) mit einem angehängten Anhänger (3), mit
- einer an dem Kraftfahrzeug (2) angeordneten ersten Kameraeinheit (4) zum Erzeugen eines ersten Bildes einer Umgebung (6) des Kraftfahrzeugs (2), auf welchem der Anhänger (3) abgebildet ist;
- einer an dem Anhänger (3) angeordneten zweiten Kameraeinheit (5) zum Erzeugen eines zweiten Bildes einer Umgebung (6) des Anhängers (3); und
- einer Recheneinheit (7) zum Erzeugen einer kombinierten Ansicht (16) der Umgebung (6) aus dem ersten und dem zweiten Bild, wobei ein von dem Anhänger (3) eingenommener Bildbereich (17) des ersten Bildes zumindest bereichsweise mit einer Bildinformation des zweiten Bildes überlagert ist, sodass der Anhänger (3) in der kombinierten Ansicht (16) zumindest bereichsweise transparent vor der im zweiten Bild abgebildeten Umgebung (6) dargestellt ist;
- einer Anzeigeeinheit (8) zum Anzeigen der kombinierten Ansicht (16) mit einer der Ansicht (16) überlagerten Soll-Fahrtrajektorie (9) für den Anhänger (3); **gekennzeichnet durch**
- eine Bedieneinrichtung zum Auswählen eines Verlaufs für die Soll-Fahrtrajektorie (9) mittels eines Betätigens der Bedieneinrichtung;
wobei die Parkassistenzvorrichtung (1) ausgebildet ist, einen zumindest teilautomatisierten Parkvorgang durchzuführen, bei welchem der Anhänger (3) automatisch auf der Soll-Fahrtrajektorie (9) mit dem ausgewählten Verlauf gehalten wird, und wobei die Parkassistenzvorrichtung ausgebildet ist, in Abhängigkeit des ausgewählten Verlaufs für die Soll-Fahrtrajektorie (9) der bei Folgen der Soll-Fahrtrajektorie (9) des Anhängers (3) durch das Kraftfahrzeug (2) überfahrene Untergrund (11) in der kombinierten Ansicht (16) zu markieren.

10. Kraftfahrzeug (2) mit einer Parkassistenzvorrichtung (1) nach Anspruch 9.

## Claims

1. Method for operating a parking assistance apparatus (1) of a motor vehicle (2) having an attached trailer (3), having the method steps of:
a) a first image of surroundings (6) of the motor vehicle (2) on which the trailer (3) is portrayed being produced by a first camera unit (4), arranged on the motor vehicle (2), of the parking assistance apparatus (1);
b) a second image of surroundings (6) of the trailer (3) being produced by a second camera unit (5), being arranged on the trailer (3), of the parking assistance apparatus (1);
c) a combined view (16) of the surroundings (6) being produced from the first and second images, wherein an image area (17) of the first image that is occupied by the trailer (3) has at least areas overlaid with a piece of image information from the second image, so that the trailer (3) in the combined view (16) has at least areas depicted transparently in front of the surroundings (6) portrayed in the second image, by a computation unit (7) of the parking assistance apparatus (1);
d) the combined view (16) being displayed by a display unit (8) of the parking assistance apparatus (1) with a desired travel trajectory (9) for the trailer (3) overlaid on the view (16); **characterized by**
e) a profile for the desired travel trajectory (9) being selected by means of operation of an operator control device of the motor vehicle (2); and
f) an at least semi-automated parking process being started in which the trailer (3) is automatically kept on the desired travel trajectory (9) having the selected profile, wherein the selected profile for the desired travel trajectory (9) is taken as a basis for marking in the combined view (16) the ground (11) over which the motor vehicle (2) travels when following the desired travel trajectory (9) of the trailer (3).

2. Method according to Claim 1,
**characterized in that**
the selecting according to method step e), in particular also the displaying according to method step d) and/or the producing according to method steps a), b) and c), can be performed only when the motor vehicle (2) is stationary.

3. Method according to either of the preceding claims,
**characterized in that**
the parking assistance apparatus (1) performs obstacle detection for the surroundings (6) of the motor vehicle (2), and, if an obstacle (12) is detected for a particular profile of the desired travel trajectory (9) in the area of the ground (11) over which the motor vehicle (2) travels when following this desired travel trajectory (9), this particular profile cannot be selected for the at least semi-automated parking process.

4. Method according to one of the preceding claims,
**characterized in that**
the at least semi-automated parking process is interrupted if the operator control device (10) is gripped and/or moved by an operator during the parking process.

5. Method according to one of the preceding claims,
**characterized in that**
the at least semi-automated parking process results in automatic longitudinal control of the motor vehicle (2) taking place.

6. Method according to one of the preceding claims,
**characterized in that**
interruption of the at least semi-automated parking process by an operator with a subsequent change to the selected profile of the desired travel trajectory (9) results in the changed profile of the desired travel trajectory (9) and the previously selected profile of the desired travel trajectory (9) being displayed in the combined view (16) .

7. Method according to Claim 6,
**characterized in that**
the ground (11) over which the motor vehicle (2) travels when following the desired travel trajectory (9) of the trailer (3) is marked in the combined view (16) for the changed profile of the desired travel trajectory (9) and for the previously selected profile of the desired travel trajectory (9) .

8. Method according to one of the preceding claims,
**characterized in that**
the selecting takes place by means of a steering wheel (10) being rotated as operation of the operator control device.

9. Parking assistance apparatus (1) for a motor vehicle (2) having an attached trailer (3), having
- a first camera unit (4), arranged on the motor vehicle (2), for producing a first image of surroundings (6) of the motor vehicle (2) on which the trailer (3) is portrayed;
- a second camera unit (5), arranged on the trailer (3), for producing a second image of surroundings (6) of the trailer (3); and
- a computation unit (7) for producing a combined view (16) of the surroundings (6) from the first and second images, wherein an image area (17) of the first image that is occupied by the trailer (3) has at least areas overlaid with a piece of image information from the second image, so that the trailer (3) in the combined view (16) has at least areas depicted transparently in front of the surroundings (6) portrayed in the second image;
- a display unit (8) for displaying the combined view (16) with a desired travel trajectory (9) for the trailer (3) overlaid on the view (16); **characterized by**
- an operator control device for selecting a profile for the desired travel trajectory (9) by means of operation of the operator control device;
wherein the parking assistance apparatus (1) is configured to perform an at least semi-automated parking process in which the trailer (3) is automatically kept on the desired travel trajectory (9) having the selected profile, and wherein the parking assistance apparatus is configured to take the selected profile for the desired travel trajectory (9) as a basis for marking in the combined view (16) the ground (11) over which the motor vehicle (2) travels when following the desired travel trajectory (9) of the trailer (3).

10. Motor vehicle (2) having a parking assistance apparatus (1) according to Claim 9.

## Revendications

1. Procédé de fonctionnement d'un dispositif d'aide au stationnement (1) d'un véhicule automobile (2) auquel est attelée une remorque (3), le procédé comprenant les étapes suivantes :
a) générer une première image d'un environnement (6) du véhicule automobile (2), sur laquelle la remorque (3) est représentée, par le biais d'une première unité de caméra (4), disposée sur le véhicule automobile (2), du dispositif d'aide au stationnement (1) ;
b) générer une deuxième image d'un environnement (6) de la remorque (3) par le biais d'une deuxième unité de caméra (5), disposée sur la remorque (3), du dispositif d'aide au stationnement (1) ;
c) générer une vue combinée (16) de l'environnement (6) à partir de la première image et de la deuxième image, une zone d'image (17), occupée par la remorque (3), de la première image étant recouverte au moins par endroits d'informations d'image de la deuxième image de sorte que la remorque (3) de la vue combinée (16) soit présentée au moins par endroits de manière transparente devant l'environnement représenté sur la deuxième image (6), par le biais d'une unité de calcul (7) du dispositif d'aide au stationnement (1) ;
d) afficher la vue combinée (16) avec une trajectoire de conduite de consigne (9), superposée à la vue (16), de la remorque (3) par le biais d'une unité d'affichage (8) du dispositif d'aide au stationnement (1) ; **caractérisé par** les étapes suivantes
e) sélectionner une allure de la trajectoire de conduite de consigne (9) par actionnement d'un moyen de commande du véhicule automobile (2) ; et
f) démarrer un processus de stationnement au moins partiellement automatisé dans lequel la remorque (3) est maintenue automatiquement sur la trajectoire de conduite de consigne (9) présentant l'allure sélectionnée, le sol (11), parcouru par le véhicule automobile (2) lorsque la remorque (3) suit la trajectoire de conduite de consigne (9), étant marqué dans la vue combinée (16) en fonction de l'allure sélectionnée de la trajectoire de conduite de consigne (9) .

2. Procédé selon la revendication 1,
**caractérisé en ce que**
la sélection selon l'étape de procédé e), en particulier l'affichage selon l'étape de procédé d) et/ou la génération selon les étapes de procédé a), b) et c) ne peuvent être réalisés que lorsque le véhicule automobile (2) est à l'arrêt.

3. Procédé selon l'une des revendications précédentes,
**caractérisé en ce que**
une détection d'obstacle est réalisée par le dispositif d'aide au stationnement (1) pour l'environnement (6) du véhicule automobile (2) et, si pour une allure déterminée de la trajectoire de conduite de consigne (9) un obstacle (12) est détecté dans la zone du sol (11) parcouru par le véhicule automobile (2) lorsque cette trajectoire de conduite de consigne (9) est suivie, cette allure déterminée ne peut pas être sélectionnée pour le processus de stationnement au moins partiellement automatisé.

4. Procédé selon l'une des revendications précédentes,
**caractérisé en ce que**
le processus de stationnement au moins partiellement automatisé est interrompu si le moyen de commande (10) est saisi et/ou déplacé par un opérateur pendant le processus de stationnement.

5. Procédé selon l'une des revendications précédentes,
**caractérisé en ce que**
une commande longitudinale automatique du véhicule automobile (2) est effectuée dans le processus de stationnement au moins partiellement automatisé.

6. Procédé selon l'une des revendications précédentes,
**caractérisé en ce que**
lorsqu'un opérateur interrompt le processus de stationnement au moins partiellement automatisé avec un changement ultérieur de l'allure sélectionnée de la trajectoire de conduite de consigne (9), l'allure modifiée de la trajectoire de conduite de consigne (9) et l'allure précédemment sélectionnée de la trajectoire de conduite de consigne (9) sont affichées dans la vue combinée (16).

7. Procédé selon la revendication 6,
**caractérisé en ce que**
pour l'allure modifiée de la trajectoire de conduite de consigne (9) et pour l'allure précédemment sélectionnée de la trajectoire de conduite de consigne (9), le sol (11), parcouru par le véhicule (2) lorsque la remorque (3) suit la trajectoire de conduite de consigne (9), est marqué dans la vue combinée (16).

8. Procédé selon l'une des revendications précédentes,
**caractérisé en ce que**
la sélection est effectuée comme actionnement du dispositif de commande par rotation d'un volant (10).

9. Dispositif d'aide au stationnement (1) destiné à un véhicule automobile (2) auquel est attelé une remorque (3), ledit dispositif comprenant
- une première unité de caméra (4) disposée sur le véhicule automobile (2) et destinée à générer une première image de l'environnement (6) du véhicule automobile (2) sur laquelle est représentée la remorque (3) ;
- une deuxième unité de caméra (5) disposée sur la remorque (3) et destinée à générer une deuxième image de l'environnement (6) de la remorque (3) ; et
- une unité de calcul (7) destinée à générer une vue combinée (16) de l'environnement (6) à partir de la première image et de la deuxième image, une zone d'image (17), occupée par la remorque (3), de la première image étant au moins partiellement recouverte d'une information d'image de la deuxième image de sorte que la remorque (3) de la vue combinée (16) soit présentée au moins par endroits de manière transparente devant l'environnement représenté sur la deuxième image (6) ;
- une unité d'affichage (8) destinée à afficher la vue combinée (16), une trajectoire de conduite de consigne (9) de la remorque (3) étant superposée à la vue (16) ;
**caractérisé par**
- un moyen de commande destiné à sélectionner une allure de la trajectoire de conduite de consigne (9) par actionnement du moyen de commande ;
le dispositif d'aide au stationnement (1) étant conçu pour exécuter un processus de stationnement au moins partiellement automatisé dans lequel la remorque (3) est maintenue automatiquement sur la trajectoire de conduite de consigne (9) présentant l'allure sélectionnée, et le dispositif d'aide au stationnement étant conçu pour marquer le sol (11), parcouru par le véhicule (2) lorsque la remorque (3) suit la trajectoire de conduite de consigne (9), dans la vue combinée (16) en fonction de l'allure sélectionnée de la trajectoire de conduite de consigne (9).

10. Véhicule automobile (2) comprenant un dispositif d'aide au stationnement (1) selon la revendication 9.
